# EUROPÄISCHE PATENTANMELDUNG

(11) **EP 0 535 321 A1**
(43) Veröffentlichungstag der Anmeldung: **07.04.1993**
(21) Anmeldenummer: 92112820.3
(22) Anmeldetag: 27.07.1992
(51) Int. Cl.: B05C 11/10, B05C 1/08, G05D 11/13

(54) **Verfahren und Vorrichtung zur Regelung des Mischungsverhältnisses einer auf eine Bahn aufgebrachten Zwei-Komponenten-Beschichtungsmasse**

(30) Priorität: 01.10.1991 DE 4132722
(71) Anmelder: Windmöller & Hölscher, D-49525 Lengerich (DE)
(72) Erfinder: Sarcander, Uwe, Dipl.-Ing., W-4540 Lengerich (DE); Helmer, Reinhard, W-4540 Lengerich (DE)
(74) Vertreter: Laufhütte, Dieter, Dr.-Ing.

(57) **Zusammenfassung**

Das Mischungsverhältnis einer auf eine Bahn (1), die zwischen einer Auftragswalze (6) und einer Gegendruckwalze (4) einer Beschichtungsvorrichtung hindurchläuft, aufgebrachten, aus einer flüssigen Zwei-Komponenten-Beschichtungsmasse bestehenden Beschichtung (9) wird dadurch geregelt, daß die beiden Komponenten in einem dem gewünschten Mischungsverhältnis entsprechenden Mengenverhältnis in eine Mischungeinrichtung eingeleitet werden, aus der dann die Beschichtungsmasse durch eine Leitung (10) der Beschichtungsvorrichtung zugeführt wird. Um das gewünschte Mischungsverhältnis über die gesamte Betriebsdauer beibehalten zu können, wird der Anteil der Komponenten an der Beschichtungsmasse in der Leitung mit einem Grenzwinkel-Refraktometer (15) gemessen. Der Ist-Wert wird mit einem Soll-Wert des Mischungsverhältnisses verglichen und bei der Messung einer Abweichung wird der der Mischeinrichtung zugeführte Mengenstrom der zuviel vorhandenen Komponente verringert und/oder derjenige der zuwenig vorhandenen Komponente wird erhöht.

## Beschreibung

Die Erfindung betrifft ein Verfahren zur Regelung des Mischungsverhältnisses einer auf eine Bahn, die zwischen einer Auftragswalze und einer Gegendruckwalze einer Beschichtungsvorrichtung hindurchläuft, aufgebrachten, aus einer flüssigen Zwei-Komponenten-Beschichtungsmasse bestehenden Beschichtung, deren beiden Komponenten in einem dem gewünschten Mischungsverhältnis entsprechenden Mengenverhältnis (Volumen oder Gewicht pro Zeiteinheit) in eine Mischeinrichtung eingeleitet werden, aus der dann die Beschichtungsmasse durch eine Leitung der Beschichtungsvorrichtung zugeführt wird.

Die nach dem erfindungsgemäßen Verfahren auf eine Materialbahn aufzubringende Beschichtung besteht aus einem klebenden Film, der in der Regel mindestens zwei Komponenten enthält, die in einem genau bestimmten Verhältnis zueinander gemischt werden müssen, um einerseits hohe Klebkraft zu garantieren und andererseits bei möglichst geringem Materialverbrauch eine gute Klebwirkung zu gewährleisten. Die Komponenten der klebenden Beschichtungsmasse werden jeweils entsprechend dem gewünschten Mischungsverhältnis mit vorbestimmten Mengen pro Zeiteinheit aus zwei oder mehr Behältern abgezogen, einer Mischeinrichtung zugeführt und in dieser gemischt. Der in dieser Mischeinrichtung aus den Komponenten zusammengemischte Film bzw. Leim wird dann einer Auftragseinrichtung einer Beschichtungsvorrichtung zugeführt. Dabei kann sich insbesondere nach längerem Betrieb eine unerwünschte Änderung des Mischungsverhältnisses ergeben, so daß sich die Gefahr einer Fehlproduktion ergibt.

Aufgabe der Erfindung ist es daher, ein Verfahren der eingangs angegebenen Art vorzuschlagen, mit dem sich das gewünschte Mischungsverhältnis über die gesamte Betriebsdauer beibehalten läßt.

Erfindungsgemäß wird diese Aufgabe bei einem Verfahren der gattungsgemäßen Art dadurch gelöst, daß der Anteil der Komponenten an der Beschichtungsmasse der Leitung mit einem Grenzwinkel-Refraktometer und der Ist-Wert mit einem Sollwert des Mischungsverhältnisses verglichen und bei Messung einer Abweichung der dem Mischer zugeführte Mengenstrom der zuviel vorhandenen Komponente verringert und/oder der der zuwenig vorhandenen Komponente erhöht wird. Dabei hat die Regelung der Mengen der beiden Komponenten so zu erfolgen, daß am Ausgang des Mischers immer die zur Beschichtung der Bahn mit dem Klebefilm benötigte Menge an der Zwei-Komponenten-Beschichtungsmasse abgegeben werden kann. Das bedeutet, daß der Regelung des Mischungsverhältnisses der Komponenten zweckmäßigerweise noch eine Regelung der Gesamtmenge der gemischten Komponenten überlagert ist. Eine derartige Regelung kann beispielsweise in der Weise erfolgen, daß die Drehzahl der die Komponenten in einem bestimmten Mengenverhältnis fördernden Pumpen bei Beibehaltung desselben relativen Drehzahlverhältnisses erhöht oder erniedrigt wird.

Als Grenzwinkel-Refraktometer kann beispielsweise das Grenzwinkel-Refraktometermodell SSR-72 der Firma Electron Machine Corp. verwendet werden, das von der Firma Rütter & Co. BV, Enschede/Holland vertrieben wird und daß in "Physics" von Halliday und Resnick, 3. Aufl., Teile 1 und 2, S. 1024 ff beschrieben worden ist.

Eine Vorrichtung zur Durchführung des erfindungsgemäßen Verfahrens zeichnet sich erfindungsgemäß dadurch aus, daß in die die Zwei-Komponenten-Beschichtungsmasse von dem Mischer zu der Beschichtungsvorrichtung führende Leitung ein Grenzwinkel-Refraktometer eingebaut ist, dessen Ausgangssignale einem Regler zugeführt werden, der die die Komponenten der Zwei-Komponenten-Beschichtungsmasse in den Mischer fördernden Pumpen steuert.

Zweckmäßigerweise ist die Leitung in dem Bereich, in dem das Grenzwinkel-Refraktometer eingebaut ist, verbreitert.

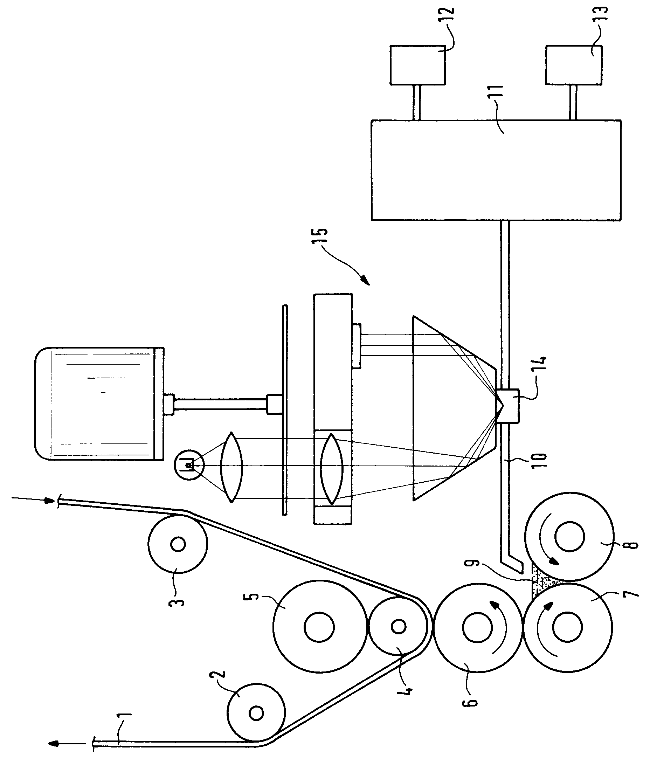

Ein Ausführungsbeispiel der Erfindung wird nachstehend anhand der Zeichnung, in deren einziger Figur eine Beschichtungsvorrichtung mit das Mischungsverhältnis der Zwei-Komponenten-Beschichtungsmasse messenden Grenzwinkel-Refraktometer schematisch dargestellt ist, näher erläutert.

Die schematisch dargestellte Beschichtungsvorrichtung besteht aus einer im Maschinengestell gelagerten Auftragswalze 6, an die eine Gegendruckwalze 4 angestellt ist, der ein Stützpresseur 5 zugeordnet ist. Die zu beschichtende Bahn wird über die Leitrolle 3 zugeführt, läuft dann zwischen der Gegendruckwalze 4 und der Auftragswalze 6 hindurch, wobei diese die Gegendruckwalze 4 bereichsweise umschlingt.

Im Bereich der Gegendruckwalze 4 wird die durchlaufende Bahn 1 über die Auftragswalze 6 mit Leim beschichtet. Dieser Leim gelangt über die Dosierwalze 7 und die Vordosierwalze 8 zu der eigentlichen Auftragswalze 6. Der Leim 9 wird dabei in einen von der Vordosierwalze 8 und der Dosierwalze 7 gebildeten Spalt über eine Rohrleitung 10 eingebracht, die an eine Mischeinrichtung 11 angeschlossen ist. Dieser Mischeinrichtung 11 wird über nicht dargestellte Pumpeinrichtung pro Zeiteinheit eine ganz bestimmte Menge einer Komponente 12 bzw. einer Komponente 13 zugeführt.

Die von dem Refraktometer erzeugten Signale werden dazu verwendet, das Mischungsverhältnis der Komponenten 12 und 13 entsprechend dem gewünschten Sollwert konstant zu halten. Weichen die Mengendurchsätze der Komponenten 12 oder 13 von dem Sollwert ab, werden die einzelnen die Komponenten in den Mischer 11 fördernden Pumpeinrichtungen in ihrer Pumpleistung durch einen nicht dargestellten Regler derart gesteuert, daß das Mengenverhältnis der geförderten Komponenten dem Sollwert entspricht.

## Patentansprüche

1. Verfahren zur Regelung des Mischungsverhältnisses einer auf eine Bahn, die zwischen einer Auftragswalze und einer Gegendruckswalze einer Beschichtungsvorrichtung hindurchläuft, aufgebrachten, aus einer flüssigen Zwei-Komponenten-Beschichtungsmasse bestehenden Beschichtung, deren beiden Komponenten in einem dem gewünschten Mischungsverhältnis entsprechenden Mengenverhältnis (Volumen oder Gewicht bzw. Masse pro Zeiteinheit) in eine Mischeinrichtung eingeleitet werden, aus der dann die Beschichtungsmasse durch eine Leitung der Beschichtungsvorrichtung zugeführt wird,
**dadurch gekennzeichnet,**
daß der Anteil der Komponenten an der Beschichtungsmasse in der Leitung mit einem Grenzwinkel-Refraktometer gemessen und der Ist-Wert mit einem Sollwert des Mischungsverhältnisses verglichen und bei der Messung einer Abweichung der der Mischeinrichtung zugeführte Mengenstrom der zuviel vorhandenen Komponente verringert und/oder der der zuwenig vorhandenen Komponente erhöht wird.

2. Vorrichtung zur Durchführung des Verfahrens nach Anspruch 1, dadurch gekennzeichnet, daß in die die Zwei-Komponenten-Beschichtungsmasse von dem Mischer zu der Beschichtungsvorrichtung führenden Leitung ein Grenzwinkel-Refraktometer eingebaut ist, dessen Ausgangssignale einem Regler zugeführt werden, der die die Komponenten in den Mischer fördernden Pumpen steuert.

3. Vorrichtung nach Anspruch 2, dadurch gekennzeichnet, daß die Leitung in dem Bereich, in dem das Grenzwinkel-Refraktometer eingebaut ist, verbreitert ist.
